# EUROPEAN PATENT SPECIFICATION

(11) **EP 0 943 873 B1**
(45) Date of publication and mention of the grant of the patent: **21.04.2004**
(21) Application number: 98104730.1
(22) Date of filing: 17.03.1998
(51) Int. Cl.: F24D 3/14, B21D 39/03

(54) **Apparatus and method of attaching a metal plate on wood or wood-like material**
Gerät und Verfahren zur Befestigung Metallplatte auf Holz oder holzähnlichen Werkstoffen
Appareil et méthode pour agraffer une plaque metallique sur du bois ou sur un materiel similaire

(43) Date of publication of application: 22.09.1999
(73) Proprietor: Fiedrich, Joachim, Carlisle, Massachusetts 01741 (US)
(72) Inventor: Fiedrich, Joachim, Carlisle, Massachusetts 01741 (US); Lagace, Robert, Durham, Conneticut 06422 (US)
(74) Representative: Busse & Busse Patentanwälte

(56) References cited:
- EP-A- 0 099 162
- US-A- 5 292 065

## Description

This invention relates to a tool for attaching a metal plate on a piece of wood or wood-like material such as of a modular unit for installing hot water tubing of radiant floor and wall hydronic heating systems.

Radiant floor heating (RFH) and radiant wall heating (RWH) are techniques of heating rooms in a dwelling or commercial building for human and creature comfort.

The applicant Joachim Fiedrich in the present application has developed and patented methods and means of providing hydronic RFH and RWH with all of the benefits thereof without embedding the loop tubing in concrete, cement or plaster, or the like, for new construction and old construction. That invention is called "Dry Installation" and is described in his U.S. patent No. 5,292,065, issued 06/30/92, entitled "Radiant Floor And Wall Hydronic Heating US-A-5 292 065 describes a modular unit for RFH and RWH that is an assembly of a thermally conductive plate and holding pieces that are spaced apart boards, so assembled that the plate and the spaced apart edges of the boards form a longitudinal slot into which the tubing fits snugly and is held longitudinally therealong in contact with the plate. The plate has been assembled with the two boards to provide a modular unit using an epoxy adhesive. That technique, while effective requires several steps in fabrication and handling a volatile epoxy adhesive.

EP-A-099 162 describes a method and a tool for fastening metallic members on a surface of a carrier material. The tool has a base, a point, a front face, a rear face, two sides and two point sides extending from said base to said point. The point of the tool defines a cutting edge extending from the front face to the rear face and having a length equal of the width of the point sides at the base of the tool and equal of the width of the hole in the piece at the attached end of said tab. The tool when thrusted through said metallic member makes a hole in the carrier and cuts a tab of the carrier that is embedded in to said hole.

It is an object of the present invention to improve the mechanical attachment of the metal plate on the piece of wood, particularly on holder boards of modular unit radiation panels to also improve heat transfer from the metal plate to the holders.

For this purpose the invention provides a tool as claimed in claim 1. Further embodiments are included in claims 2 through 11.

The toot or punch that may be driven by for example, an air press through the metal plate or sheet and about half way through the adjacent holder board, leaving an elongated hole a fraction of an inch long and embedding one or more tabs or strips of the metal into the board, so that the free end of the tab (the embedded end) is wider than the attached end, making it most difficult to pull the aluminum sheet from the holder board without tearing the sheet away from the tabs. A staking pattern of rows over the sheet of aluminum where it contacts the boards completes the attachment.

The invention will be described in more detail hereinafter, by way of example, with reference to the accompanying drawings, in which:
Figure 1 is an enlarged front view of the staking tool;
Figure 2 is an enlarged bottom view of the staking tool;
Figure 3 (view AA) is an enlarged cross-section bottom view of the staking tool, taken as cross-section AA in Figure 1;
Figure 4 (view CC) is an enlarged cross section front view of a part of a modular unit radiation panel, taken as cross-section CC in Figure 5, showing the staking tool front view penetration of the panel through an aluminum sheet into the wood holder and the two tabs of aluminum cut by the tool and embedded into the wood;
Figure 5 (view BB) is another enlarged cross section end view of a part of the same modular unit radiation panel, taken as cross-section BB in Figure 4, showing the transverse view of the hole made by the penetration through the aluminum sheet into the wood holder and the one of tabs of aluminum cut by the tool and embedded into the wood, after the tool is removed;
Figure 6 is an enlarged top view (from the aluminum sheet side) a modular unit radiation panel showing the hole created by the staking tool penetration through the aluminum sheet into the wood holder, the two strips of aluminum cut by the tool and embedded into the wood and the bottom of the hole in the wood holder produced by the tool penetration;
Figure 7 is a top perspective view of a modular unit radiation panel of the first type showing the rows of penetrations by the staking tool over the sheet of aluminum where it contacts the boards to complete the attachment;
Figure 8 is a top perspective view of a modular unit radiation panel of the second type showing the rows of penetrations by the staking tool over the sheet of aluminum where it contacts the boards to complete the attachment;
Figure 9 is the same as Figure 7, a top perspective view of a modular unit of the first type, before attachment of the aluminum to the holder boards by staking;
Figure 10 is an enlarged end view of the modular unit of the first type with a resilient filler material of caulking or epoxy adhering the tubing against the plate in intimate thermal contact therewith;
Figure 11 is an end view an RFH installation where modular units of the first type are installed under the rough flooring between the floor joists of a room and tubing is inserted therein;
Figure 12 is an end view an RFH installation where modular units of the first type are installed on top of the rough flooring of a room, abutting each other side by side and tubing is inserted therein;
Figure 13 is a perspective view of a modular unit of the second type before attachment of the aluminum to the holder boards by staking;
Figure 14 is an enlarged end view of the modular unit of the second type showing the aluminum heat transfer plate with a longitudinal groove, the holder boards and a resilient filler material of caulking or epoxy adhering the tubing against the plate in intimate thermal contact therewith in the groove;
Figures 15 is an end view of an RFH installation of modular units of the second type on top of the rough flooring in a room; and
Figure 16 is an enlarged cross-section view like Figure 4, but with the staking tool removed, of a modular unit of the first type installed on top of the rough flooring as in Figure 12, with the tubing inserted into the slot and a finished flooring installed on top and with part broken away to reveal the tubing and slot, illustrating improved heat transfer from the metal sheet to the finished floor for RFH.

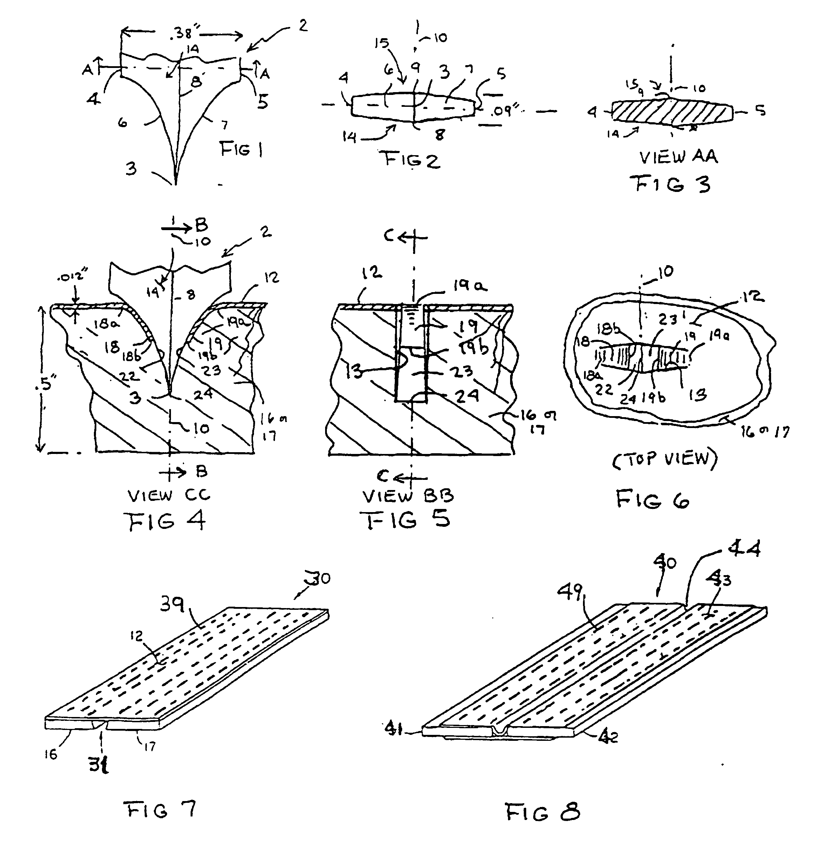

Figures 1 to 8 illustrate the technique of the present invention for attaching the radiating aluminum plate or sheet to the holder boards in the assembly of a modular unit radiation panel wherein a plate or sheet of aluminum, or other thermally conductive metal as malleable as aluminum, such as copper, is attached to a holder surface that can be penetrated like wood and can be attached to rough flooring in a room of a dwelling by nails, screws, staples, etc the way wood can be attached. Figures 1 to 4 show the staking tool and Figures 4 to 6 show the hole through the aluminum sheet and into the board whereby the sheet is fixedly attached to the board.

The point 3 of the staking tool 2 is shown in Figures 1, 2 and 4. As viewed from the point end in Figure 2 and also in cross-section in Figure 4, the staking tool imprint is elongated and generally rectangular in shape, so that it makes a generally rectangular hole 13 (see Figures 5 and 6) through the aluminum sheet 12 into the wood board, 16 or 17, about 6 mm into the board. The penetration is made by chisel-like point 3 of the tool which is the first part of the tool to cut through the aluminum sheet.

From the parallel sides 4 and 5 of the tool body, the tool point sides 6 and 7 abruptly curve inward toward the center of the tool asymptotically approaching the transverse plane of symmetry 10 of the tool, in which peaks 8 and 9 in the front 14 and rear 15 faces, respectively, lie. The peaks 8 and 9 of the front face 14 and rear face 15, respectively, of the tool point make the point 3 wider than the sides 4 and 5

Figure 4 illustrates the tool driven a suitable depth through the aluminum sheet 12 into the board 16 or 17. When this is done tabs 18 and 19 of the aluminum sheet are cut and forced into the hole 13 in the board. These tabs 18 and 19 are forced against the sloping sides 22 and 23, respectively of the hole 13 that meet at the bottom 24 of the hole. Since the point 3 of the tool is wider than the sides 4 and 5, the free end of each tab, 18b for tab 18 and 19a for tab 19, is wider than the attached end, 18a for tab 18 and 19a for tab 19. Also, importantly, the free end of each tab is wider than the sloping side of the hole in the board (sloping side 22 for tab 18 and 23 for tab 19) that the tab must be pulled from in order to pull the tab out of the hole. As a consequence, this technique including the staking tool structure and its use effects a very secure attachment of the aluminum sheet to the board. In fact, the sheet cannot be pulled away from the board except by tearing loose the tabs from the sheet.

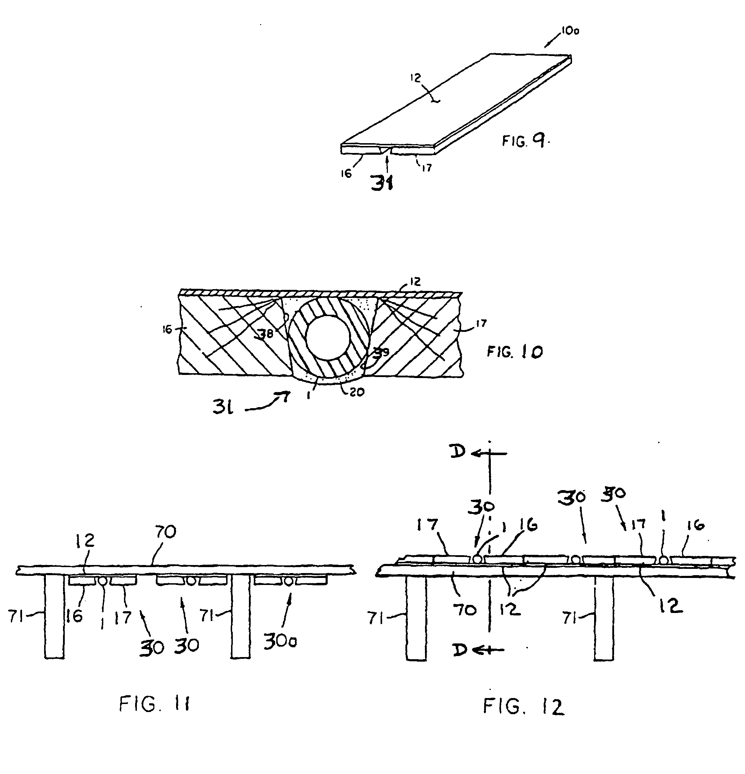

The structure and method of attaching the aluminum sheet to the board, described above for a single staking is repeated over the whole of the aluminum sheet 12 that is contiguous with one or the other of the holding boards 16 and 17 forming several rows of the staking attachments. As shown in Figure 7 for a modular unit heating radiation panel 30 of the first type the rows 39 are comprised of staking holes end to end. Similarly, as shown in Figure 8 for a modular unit heating radiation panel of the second type 40 the rows 49 are comprised of staking holes end to end. clearly for either type panel the staking holes in a row may be side by side or in any kind of alternating arrangement desired.

A configurations of a module unit of the first type is shown in detail in Figures 9 and 10. A typical modular unit of this type, denoted 30, is comprised of two lengths 16 and 17 of plywood, particle board or other rigid material, about the same thickness as the outside diameter of the tubing it is installed with. The two lengths 16 and 17 of holder pieces (herein also called sleepers) hold the metal heat conducting radiation plate 12 fixedly attached thereto provide a tubing containment slot 31 into which the tubing 1 is inserted against the plate as shown in Figure 10 at installation.

As shown in Figure 10, the tubing containment slot 31 is the space between sleeper pieces 16 and 17 and is closed on one side (the top side in Figure 10) by plate 12 and so the tubing must be inserted into the slot from the opposite side of the space (the bottom side in Figure 10). Thus, the open side of slot 31 is exposed for insertion of the tubing whether mounting is to the underside of the sub-flooring, as shown in Figure 11, or to the top side of the sub-flooring as shown in Figure 12.

Installation of the modular units 30 and tubing 1 to the underside of the sub-flooring 70 of a room, as shown in Figure 11, the sub-flooring being supported by floor joists, such as floor joist 71, the modular unit may first be stapled, nailed or otherwise firmly attached to the underside of the sub-flooring and then the tubing is inserted laterally into the slot 31 against the plates so that the tubing and the plates are in intimate thermal contact.

Installation of the modular units 30 and tubing 1 on top of the sub-flooring 70 is shown in Figure 12. The modular units 30 are first stapled, nailed or otherwise firmly attached to the underside of the sub-flooring, side by side and end to end abutting each other and then the tubing is inserted laterally into the slot 31 against the plates so that the tubing and the plates are in intimate thermal contact.

For this on top of the sub-flooring installation, the part of the sub-flooring in the room that is not completely covered by a modular piece of one type or the other must be brought up to the level of the part that is covered, by pieces such as 88.

The plate is made of highly thermally conductive material such as aluminum or copper. For example, it can be made of a sheet of 0,3 mm 3005 alloy aluminum; and is attached to sleepers 16 and 17 by staking as described hereinabove.

For installations in wood frame construction where the spacing between floor joists and between wall studs is 40 cm on center, the modular unit size is made in consideration of that usual joist and stud spacing. For example, for the under floor installation shown in Figure 11, two modular pieces must fit side by side in a bay between floor joists and the bay width is about 37 cm. Therefore, the preferred width of the module piece is less than half of that, or between 15 and 18 cm. The length of the modular unit is preferably a whole multiple of 40 cm and preferably 80 or 120 cm.

The inside edges of the sleeper pieces define slot 31 into which the tubing is inserted and held against the plate. Those edges 38 and 39 (shown in Figure 8) are preferably beveled as shown. The purpose of the bevel is to taper the space 14 so that it becomes wider toward the plate. Thus, the tubing must be forced into the slot from the open side thereof and once forced in is held firmly therein against plate 12. The tubing is further held securely in the slot in intimate thermal contact with the plate by an epoxy material 20, as is described further hereinbelow.

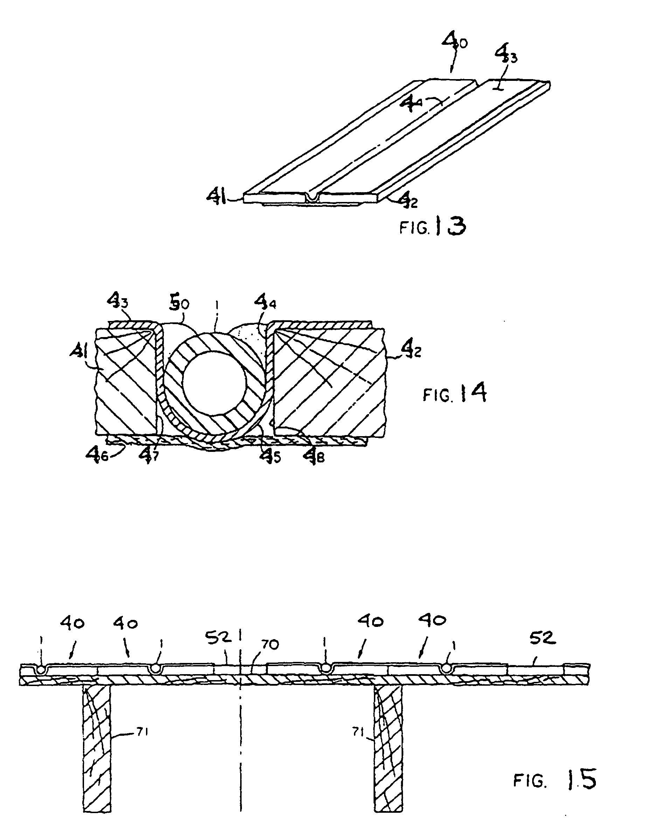

A configuration of a modular unit of the second type is shown in Figures 13 to 15. A typical modular unit 40 of this type is shown in Figures 13 and 14. It is composed of two lengths 41 and 42 of plywood, particle board or other rigid board-like material, about the same thickness as the outside diameter of the tubing it is to be installed with. The two lengths 41 and 42 (herein also called sleepers) hold the metal heat conduction and radiation plate or sheet 43, which has a longitudinal groove 44 the length thereof that fits snugly into slot 41, defined by the boards 41 and 42 and at installation, the tubing 1 fits snugly (or snaps) into the groove.

The sheet 43 is made of highly thermally conductive material such as aluminum or copper. For example, it can be made of a sheet as thin as 0,3 mm 3005 alloy aluminum; and is attached to sleeper boards 41 and 42 by staking as described hereinabove. The groove 44 formed in such sheet aluminum can be easily distorted as the spacing between the two sleepers varies. To avoid this, a piece of reinforcing mat 46 may be attached to both sleeper boards, bridging the slot and so insuring a degree of lateral dimensional stability of the module unit parts. The mat 46 may be fiber glass reinforced flexible material that is attached by stapling to the sleeper pieces as shown. The completed modular unit 40, shown in Figure 13 is substantially rigid longitudinally and can flex slightly along the groove 44.

The inside edges of the sleeper boards define the slot into which the groove in the plate fits. Those edges 47 and 48 may be parallel to each other and perpendicular to the plane of the modular piece as shown in Figure 12 or they may be tapered so that it is slightly more narrow at the open end (the top as shown in Figures 11 and 12) where the tubing enters it and widens slightly toward the bottom thereof where the tubing is contained.

Figure 15 is an end view of an RFH installation on top of the sub-flooring, 70, showing several modular pieces of the second type, arranged side by side and end to end on the sub-flooring, on an area thereof in a room.

A compliant filler and holding material around the tubing held in the slot 31 in the first type modular unit shown in Figure 10 and denoted material 20, and around the tubing in the second type modular unit shown in Figure 14 and denoted 50, in the first type is applied to the slot before the tubing is inserted and forced into the slot. For the second type, compliant filler is applied after the tubing is inserted and forced into the groove. A purpose of the filler material is to hold the tubing in the slot/groove as an adhesive, while at the same time allowing the tubing to expand and contract longitudinally within the slot/groove of successive modular units that hold a length of tubing at installation. The tubing must be free to expand and contract, while the modular units are fixed by staples, nails, screws, etc. to the sub-flooring. Another purpose of the filler material is to reduce noise created by expansions and contractions of the tubing in the slot/groove. Yet another important purpose is to provide a medium of thermal conduction from the tubing to the plate; and for that purpose it is important that the filler fill all voids between the tubing and the metal plate or sheet. A suitable filler material for any of these purposes is silicone rubber.

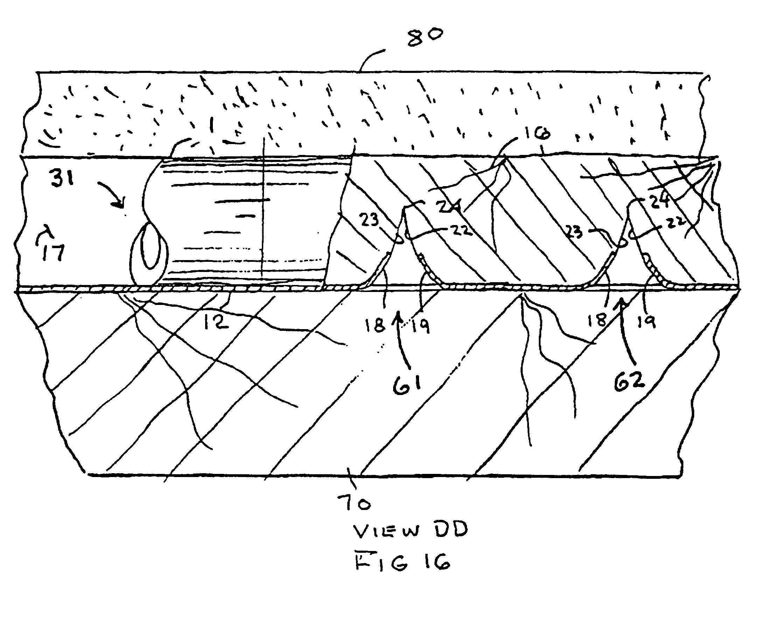

Figure 16 is an enlarged cross-section view like Figure 4, but with the staking tool removed, of a modular unit of the first type installed on top of the rough flooring 70 as in Figure 12, with the tubing 1 inserted into the slot 31 and a finished flooring 80 installed on top. In this Figure several staking holes 61 and 62 are shown end to end in the cross-section view. Also, part of the cross-section view is broken away to reveal the tubing and slot.

Each of the staking holes 61 and 62 shown has two tabs (18 and 19) of the aluminum sheet 12 embedded up into the hole in the holding board 16 toward the finished flooring 80. These tabs conduct heat from the aluminum sheet up into the wood holder board 16 and so raise the temperature of the board more than would occur, all else being the same, without the tabs. Thus, the tabs tend to heat the holder boards by conduction as well as firmly attaching the aluminum sheet to the boards.

By heating the holder boards 16 and 17 more heat is conducted from the holder boards to the finished flooring 80 in addition to radiation from the aluminum sheet and so heat transfer from the aluminum sheet to the finished floor for RFH is improved.

While the invention described herein is a tool for attaching a metal plate or sheet to a surface of wood and is described in connection with several preferred embodiments of modular unit radiation panels for installation with heating loop tubing of hydronic RFH or RWH systems, it will be understood that it is not intended to limit the invention to those embodiments.

## Claims

1. Tool for attaching a metal plate (12) or sheet to a surface of a piece of wood or woodlike material, said tool having a base, a point (3), a front face (14), a rear face (15), two sides (4,5) and two point sides (6;7) extending from said base to said point (3) which defines a cutting edge extending from said front face (14) to said rear face (15), whereby said tool point (3) being thrustable through said metal plate (12) or sheet into said piece (16;17) of wood to make a hole (13) in said piece (16;17) and to cut a tab (18;19) of said metal (12) that is embedded into said hole (13), **characterized in that** the length of said point edge is greater than the width of said point sides (6;7) at said base to cut a free end of said tab being wider than the end thereof attached to said metal plate (12) or sheet and wider than said hole (13) in said piece (16;17) of wood at said attached end of said tab (18;19).

2. Tool as claimed in claim 1, wherein the width of at least one of said point sides (6;7) increases from said base to said point (3).

3. Tool as claimed in claim 2, wherein said point sides (6;7) meet at said point (3).

4. Tool as claimed in claim 2 or 3, wherein said at least one point side (6;7) curves from said base toward said point (3) as viewed from said front face (14).

5. Tool as claimed in claim 4, wherein said curve is concave.

6. Tool as claimed in claim 4 or 5, wherein said curve is asymptotic to said other point side (6;7) at said point (3).

7. Tool as claimed in claim 6, wherein said curve is asymptotic to said metal plate (12) or sheet where said curve meets said base.

8. Tool as claimed in claim 7, wherein said curve is perpendicular to the side (4;5) at said base where said curve meets said base.

9. Tool as claimed in claim 1, wherein said point edge is sharp to facilitate penetration through said metal plate (12) or sheet.

10. Tool as claimed in one of the claims 1 to 9, wherein there is a plane of symmetry (10) through said point (3) parallel to said sides (4;5) and said point edge lies in said plane of symmetry (10).

11. Tool as claimed in one of the claims 1 through 10, wherein the thermally conductive metal plate (12) or sheet is attached to a flat surface of a wood holder (16;17) in a process of fabricating modular unit radiation panels for mounting in a floor or a wall of a room of a building heated by a hydronic heating system that pumps hot water through tubing that is held by said modular units for RFH or RWH, respectively, wherein said modular unit is an assembly of said thermally conductive metal plate (12) or sheet having length, width and thickness and said wood holders (16;17) are two flat wood boards evenly speced apart to provide a slot (31) in which said tubing is inserted and held againt said metal plate (12) or sheet.

## Patentansprüche

1. Werkzeug zum Verbinden einer Metallplatte (12) oder eines Bleches mit einer Oberfläche eines Teils aus Holz oder holzähnlichem Material, wobei das Werkzeug eine Basis, eine Spitze (3), eine stimseitige Fläche (14), eine rückseitige Fläche (15), zwei Seiten (4,5) und zwei Spitzenseiten (6;7) aufweist, die sich von der Basis zur Spitze (3) erstrecken, die eine Schneidkante bildet, welche von der stirnseitigen Fläche (14) zur rückseitigen Fläche (15) verläuft, wodurch die Werkzeugspitze (3) durch die Metallplatte (12) oder das Blech in das Holzteil (16;17) zur Herstellung eines Loches (13) in dem Teil (16;17) und zum Schneiden eines Lappens (18;19) des Metalls (12) hineindrückbar ist, der in dem Loch (13) eingebettet ist, **dadurch gekennzeichnet, daß** die Länge der Spitzenkante größer ist als die Breite der Spitzenseiten (6;7) an der Basis, zum Schneiden eines freien Endes des Lappens, das breiter ist als dessen Verbindungsende zur Metallplatte (12) oder zum Blech und breiter als das Loch (13) im Holzteil (16;17) am Verbindungsende des Lappens (18;19).

2. Werkzeug nach Anspruch 1, bei dem die Breite zumindest einer der Spitzenseiten (6;7) von der Basis zur Spitze (3) größer wird.

3. Werkzeug nach Anspruch 2, bei dem die Spitzenseiten (6;7) an der Spitze (3) zusammentreffen.

4. Werkzeug nach Anspruch 2 oder 3, bei dem zumindest eine Spitzenseite (6;7) von der Basis zur Spitze (3), von der stirnseitigen Fläche (14) aus gesehen, gekrümmt ist.

5. Werkzeug nach Anspruch 4, bei dem die Krümmung konkav ist.

6. Werkzeug nach Anspruch 4 oder 5, bei dem die Kurve asymptotisch zu der anderen Spitzenseite (6;7) an der Spitze (3) ist.

7. Werkzeug nach Anspruch 6, bei dem die Krümmung asymptotisch zur Metallplatte (12) oder zum Blech ist, wo die Krümmung mit der Basis zusammentrifft.

8. Werkzeug nach Anspruch 7, bei dem die Krümmung senkrecht zur Seite (4;5) an der Basis verläuft, wo die Krümmung mit der Basis zusammentrifft.

9. Werkzeug nach Anspruch 1, bei dem die Spitzenkante zur Erleichterung des Vordringens durch die Metallplatte (12) oder das Blech scharf ist.

10. Werkzeug nach einem der Ansprüche 1 bis 9, bei dem eine Symmetrieebene (10) durch die Spitze (3) parallel zu den Seiten (4;5) gegeben ist und die Spitzenkante in der Symmetrieebene (10) liegt.

11. Werkzeug nach einem der Ansprüche 1 bis 10, bei dem die/das wärmeleitende Metallplatte (12) oder Blech an einer ebenen Oberfläche eines Holzhalters (16;17) angebracht ist in einem Prozeß der Herstellung von Strahlungsfeldmoduleinheiten zur Anbringung in einem Boden oder einer Wand eines Raums eines Gebäudes, das von einem Heißwasserheizungssystem geheizt ist, welches Heißwasser durch eine Rohrleitung pumpt, die von den Moduleinheiten für eine Fußbodenheizung bzw. Wandheizung gehalten ist, wobei die Moduleinheit eine Anordnung der/des wärmeleitenden Metallplatte (12) oder Bleches mit Länge, Breite und Dicke ist und die Holzhalter (16;17) zwei ebene Holzbretter sind, die gleichmäßig zur Bildung eines Schlitzes (31) beabstandet sind, in dem die Rohrleitung eingesetzt und an der Metallplatte (12) oder dem Blech gehalten ist.

## Revendications

1. Outil pour fixer une plaque (12) ou une feuille métallique sur une surface d'une pièce de bois ou d'une matière similaire au bois, ledit outil comprenant une base, une pointe (3), une face avant (14), une face arrière (15), deux côtés (4 ; 5) et deux flancs de pointe (6; 7) s'étendant à partir de ladite base jusqu'à ladite pointe (3) qui définit un bord coupant s'étendant à partir de ladite face avant (14) jusqu'à ladite face arrière (15), dans lequel ladite pointe de l'outil (3) peut être enfoncée à travers ladite plaque (12) ou feuille métallique dans ladite pièce de bois (16; 17) afin de pratiquer un trou (13) dans ladite pièce (16; 17) et de couper une languette (18; 19) dudit métal (12) qui est insérée dans ledit trou (13), caractérisé ce que la longueur dudit bord pointu est plus grande que la largeur desdits flancs de pointe (6; 7) à ladite base de manière à couper une extrémité libre de ladite languette plus large que l'extrémité de celle-ci qui est fixée sur ladite plaque (12) ou feuille métallique et plus large que ledit trou (13) dans ladite pièce (16; 17) de bois à ladite extrémité fixée de ladite languette (18; 19).

2. Outil suivant la revendication 1 dans lequel la largeur d'au moins un desdits flancs de pointe (6; 7) augmente à partir de ladite base jusqu'à ladite pointe (3).

3. Outil suivant la revendication 2 dans lequel lesdits flancs de pointe (6; 7) se rencontrent à ladite pointe (3).

4. Outil suivant la revendication 2 ou 3 dans lequel ledit au moins un flanc de pointe (6; 7) se courbe à partir de ladite base jusqu'à ladite pointe (3) vu depuis ladite face avant (14).

5. Outil suivant la revendication 4 dans lequel ladite courbe est concave.

6. Outil suivant la revendication 4 ou 5 dans lequel ladite courbe est asymptotique par rapport audit autre flanc de pointe (6; 7) à ladite pointe (3).

7. Outil suivant la revendication 6 dans lequel ladite courbe est asymptotique par rapport à ladite plaque (12) ou feuille métallique à l'endroit où ladite courbe rencontre ladite base.

8. Outil suivant la revendication 7 dans lequel ladite courbe est perpendiculaire au côté (4; 5) à ladite base à l'endroit où ladite courbe rencontre ladite base.

9. Outil suivant la revendication 1 dans lequel ledit bord pointu est tranchant de manière à faciliter la pénétration à travers ladite plaque (12) ou feuille métallique.

10. Outil suivant l'une quelconque des revendications 1 à 9 dans lequel il existe un plan de symétrie (10) à travers ladite pointe (3) parallèle auxdits côtés (4; 5), et ledit bord pointu se trouve dans ledit plan de symétrie (10).

11. Outil suivant l'une quelconque des revendications 1 à 10 dans lequel ladite plaque (12) ou feuille métallique conductrice de la chaleur est fixée sur une surface plate d'un support de bois (16; 17) lors d'un procédé de fabrication de panneaux de rayonnement unitaires modulaires à monter dans un plancher ou sur un mur d'une pièce d'un bâtiment chauffé par un système de chauffage par écoulement de fluide caloporteur qui pompe de l'eau chaude à travers un tube qui est maintenu par lesdites unités modulaires pour un chauffage radiant dans le sol ou un chauffage radiant dans les murs, respectivement, dans lequel ladite unité modulaire est un assemblage de ladite plaque (12) ou feuille métallique conductrice de la chaleur présentant une certaine longueur, largeur et épaisseur, et lesdits supports de bois (16; 17) sont deux planches plates en bois uniformément espacées de manière à former une fente (31) dans laquelle ledit tube est inséré et maintenu contre ladite plaque (12) ou feuille métallique.
